# FASCICULE DE BREVET EUROPEEN

(11) **EP 2 819 520 B1**
(45) Date de publication et mention de la délivrance du brevet: **24.04.2019**
(21) Numéro de dépôt: 13712846.8
(22) Date de dépôt: 26.02.2013
(51) Int. Cl.: A21B 3/13

(54) **DISPOSITIF DE PLAQUE SUPPORT DE PRODUITS DE BOULANGERIE**
TRÄGERPLATTEVORRICHTUNG FÜR BÄCKEREI PRODUKTE
DEVICE WITH CARRIER PLATE FOR BAKERY PRODUCTS

(30) Priorité: 29.02.2012 FR 1251868; 09.07.2012 FR 1256582
(43) Date de publication de la demande: 07.01.2015
(73) Titulaire: MECATHERM, Société Anonyme, 67130 Barembach (FR)
(72) Inventeur: ZORN, Bernard, F - 67700 Saverne (FR); SERGENT, Olivier, F - 49000 Angers (FR)
(74) Mandataire: Rhein, Alain
(86) Numéro de dépôt international: PCT/FR2013/050386
(87) Numéro de publication internationale: WO 2013/128107

(56) Documents cités:
- WO-A1-95/24128
- DE-A1- 19 905 221
- DE-A1- 19 959 465
- DE-U1- 29 708 638
- FR-A1- 2 682 262
- US-A- 3 746 837

## Description

L'invention concerne un dispositif de plaque support de produits de boulangerie, pâtisserie ou viennoiserie.

La présente invention trouvera son application dans le domaine des ustensiles et installations pour la production de produits de boulangerie, pâtisserie, viennoiserie ou similaires. Elle trouvera un intérêt tout particulier dans le domaine des plaques utilisées pour l'acheminement de ces produits au travers des différentes unités de traitement, en particulier lors des étapes de fermentation et de cuisson.

Dans le domaine de la boulangerie, la pâte subit une étape de division en pâtons puis de façonnage de ces derniers qui sont alors déposés sur des plaques ou dans des moules, servant à leur transport, en particulier au travers d'une étape de fermentation et du passage au sein du four de cuisson.

En particulier, de nombreux produits doivent conserver une forme spécifique bien déterminée lors de la fermentation et au cours de la cuisson. Ils sont placés à cet effet à l'intérieur de moules présentant ladite forme souhaitée au niveau du fond et du pourtour.

Toutefois, les moules sont ouverts en partie supérieure pour permettre leur approvisionnement en pâton et l'extraction des produits après cuisson. Dès lors, le pâton gonfle ou « pousse » au cours de la fermentation et de la cuisson, modifiant l'aspect supérieur du produit fini.

Pour pallier cet inconvénient, chaque moule est refermé en partie supérieure.

Des exemples d'une telle fermeture et du verrouillage du couvercle d'un seul moule sont décrits dans les documents WO 95/24128 ou DE 199 59 465. Un tel verrouillage peut aussi être appliqué par un unique couvercle sur plusieurs moules à la fois, comme notamment décrit dans les documents DE 297 08 638 ou FR 2 682 262.

En outre, une force de rappel élastique peut être appliquée depuis le haut vers le bas, afin de maintenir une pression descendante du couvercle sur tous les moules à la fois.

Dans ce cadre, au sein des lignes de boulangeries industrielles, il est d'usage d'utiliser des « attelages » de moules, qui permettent de convoyer un certain nombre de moules sur une seule unique plaque support. Dès lors, une seule plaque est appliquée en recouvrement de plusieurs moules à la fois, en appui sur les chants supérieurs desdits moules. Ainsi, les moules refermés, le gonflement supérieur du pâton lors de sa fermentation et de sa cuisson est contenu et limité.

Mais une telle technique n'assure pas l'étanchéité et on constate après fermentation ou cuisson des débordements de pâte, en périphérie supérieure du produit, qui ne présente plus la forme et la qualité souhaitées. Ces débordements proviennent du fait que les chants supérieurs des bords desdits moules ne sont pas intégralement accolés à la plaque de recouvrement. En somme, les hauts des moules ne sont pas tous coplanaires entre eux, créant des différences de niveau par lesquelles la pâte s'échappe lors de la fermentation ou de la cuisson.

Pour pallier ce problème, la solution actuellement employée réside dans le maintien de la plaque de recouvrement sur la plaque support en appui sur les moules, en appliquant une force adaptée pour plaquer la face supérieure de ladite plaque de recouvrement contre les chants supérieurs des moules. Pour ce faire, des moyens mécaniques de verrouillage et de serrage complexes équipent les deux plaques support et de recouvrement pour appliquer en plusieurs points une force de serrage desdites plaques entre elles. La déformation et les contraintes mécaniques ainsi appliquées aux plaques sont sensées garantir l'étanchéité des moules avec ladite plaque de recouvrement.

Encore une fois, on constate malgré tout des bavures provenant du fait que les bords supérieurs des moules ne sont pas dans un même plan et ne viennent pas en parfait accolement contre la face inférieure de la plaque de recouvrement. De plus, les contraintes mécaniques et thermiques que subissent les moules et les plaques, entrainent des déformations des matériaux les constituant au cours de la cuisson. Ainsi, la pâte s'infiltre par les moindres interstices qui se créent, malgré la force globale de serrage exercée entre les plaques.

De plus, les moyens de verrouillage subissent des dilatations au cours du chauffage, rendant difficile la désolidarisation des plaques après cuisson. Enfin, de tels moyens sont onéreux et coûteux en entretien.

La présente invention a pour but de pallier les inconvénients de l'état de la technique, en proposant un maintien individualisé de la plaque de recouvrement les moules, assurant le maintien en contact des chants supérieurs des bords desdits moules avec la face inférieure de la plaque de recouvrement. Pour ce faire, l'invention prévoit d'appliquer localement une force de rappel élastique à chaque moule, plutôt qu'aux deux plaques entre elles.

Ainsi, l'invention a pour objet un dispositif de plaque support de produits de boulangerie, pâtisserie ou viennoiserie, comprenant au moins une plaque inférieure et au moins deux moules supportés par ladite plaque inférieure, ledit dispositif comprenant encore au moins une plaque supérieure venant en recouvrement desdits moules, sa face inférieure venant en contact avec les chants supérieurs de leurs bords respectifs, caractérisé par le fait qu'il comprend des moyens de rappel élastique de chaque moule selon une force repoussant de façon individuelle et indépendante chaque moule contre la face inférieure de la plaque supérieure.

Dès lors, l'invention applique une force verticale du bas vers le haut pour chaque moule indépendamment les uns des autres visant à plaquer la face supérieure de chaque moule contre la face inférieure de la plaque de recouvrement. En somme, plusieurs forces sont appliquées et chaque force repousse chaque moule de façon distincte et dédiée depuis la plaque inférieure contre la plaque supérieure. Ainsi, chaque force est dédiée à la fermentation et la cuisson d'un produit.

De plus, les moyens de rappel élastiques mis en oeuvre sous chaque moule assurent, d'une part, une articulation générant une liberté de mouvement permettant d'adapter la zone contact des chants supérieurs des bords de chaque moule avec ladite face inférieure, en fonction des co-planéités des chants des moules avec la face inférieures de la plaque de recouvrement et, d'autre part, d'appliquer une force dédiée à chaque produit à même de conservant le plaquage contre la face inférieure de ladite plaque de recouvrement lors du gonflement de ce dernier.

Selon d'autres caractéristiques additionnelles, lesdits moyens de rappel élastique comprennent une liaison articulée avec chaque moule, de manière à assurer au moins un degré de liberté de mouvement dudit moule, de préférence au moins trois degrés de liberté. En particulier, les moyens de rappel peuvent constituer eux-mêmes ladite liaison articulée autorisant, d'une part, une translation verticale et, d'autre part, des déplacements en pivotement selon au moins deux axes dans un plan oscillant par rapport au plan de la plaque inférieure.

Selon un premier mode de réalisation, lesdits moyens de rappel élastique se présentent sous la forme d'au moins un ressort de compression.

Selon un autre mode de réalisation, lesdits moyens de rappel élastique se présentent sous la forme d'au moins une lame flexible en matériau à mémoire de forme.

De préférence, ladite plaque supérieure de recouvrement peut présenter une masse dont le poids est au moins supérieur à la somme totale des forces desdits moyens de rappel élastique.

En particulier, ledit dispositif peut comprendre des moyens de verrouillage rapide de ladite plaque supérieure de recouvrement avec ladite plaque support inférieure. De plus, ces moyens de verrouillage assurent la stabilité du dispositif lors de son convoyage.

En outre, la solution ainsi mise en oeuvre simplifie considérablement l'opération de recouvrement des moules avant fermentation et d'ouverture après cuisson. En effet, le seul poids de la plaque de recouvrement, faisant office de couvercle, peut être suffisant pour garantir un effort vertical vers le bas qui assure la compression des moyens de rappel élastique de tous les moules, y compris du moule le plus bas. Le poids de ce couvercle et la force de rappel sont donc liés pour apporter l'effort minimal requis pour lutter contre la pousse du produit en cours de fermentation et lors de sa cuisson.

Par ailleurs, l'invention peut ainsi s'affranchir des moyens complexes de verrouillage des plaques entre elles. Ils peuvent toutefois être conservés et sont alors considérablement simplifiés, permettant un verrouillage sous forme d'attaches rapides simplement dédiées à maintenir les plaques entre elles, sans nécessiter d'appliquer une force puisque les moyens de rappel élastique s'en chargent.

D'autres caractéristiques et avantages de l'invention ressortiront de la description détaillée qui va suivre des modes de réalisation non limitatifs de l'invention, en référence aux figures annexées, dans lesquelles :
- la figure 1 représente une vue en perspective d'un exemple de réalisation d'un dispositif selon l'invention en configuration refermée ;
- la figure 2 représente une vue similaire à la figure 1 dudit dispositif en configuration ouverte ;
- la figure 3 représente une vue en coupe verticale du détail des moyens de rappel élastique selon un premier mode de réalisation ;
- la figure 4 représente une vue en coupe verticale des moyens de rappel élastique selon un autre mode de réalisation ;
- la figure 5 représente une vue en coupe vertical des moyens de rappel élastique selon encore un autre mode de réalisation ;
- la figure 6 représente une vue en perspective partiellement en transparence d'un mode de réalisation particulier, montant les moyens de verrouillage de la plaque de couverture ; et
- la figure 7 représente une vue en une coupe longitudinale selon un plan vertical de la figure 6.

La présente invention concerne un dispositif 1 de plaque support de produits de boulangerie, pâtisserie ou viennoiserie.

Un tel dispositif 1 comprend au moins une plaque inférieure 2 et au moins deux moules 3, de préférence plusieurs rangées et colonnes de moules 3, supportés par ladite plaque inférieure 2 ou bien par des moyens supports adaptés.

Une telle plaque 2 peut présenter une forme générale parallélépipédique rectangle, équipée ou non sur son pourtour d'un cadre 20 améliorant sa rigidité.

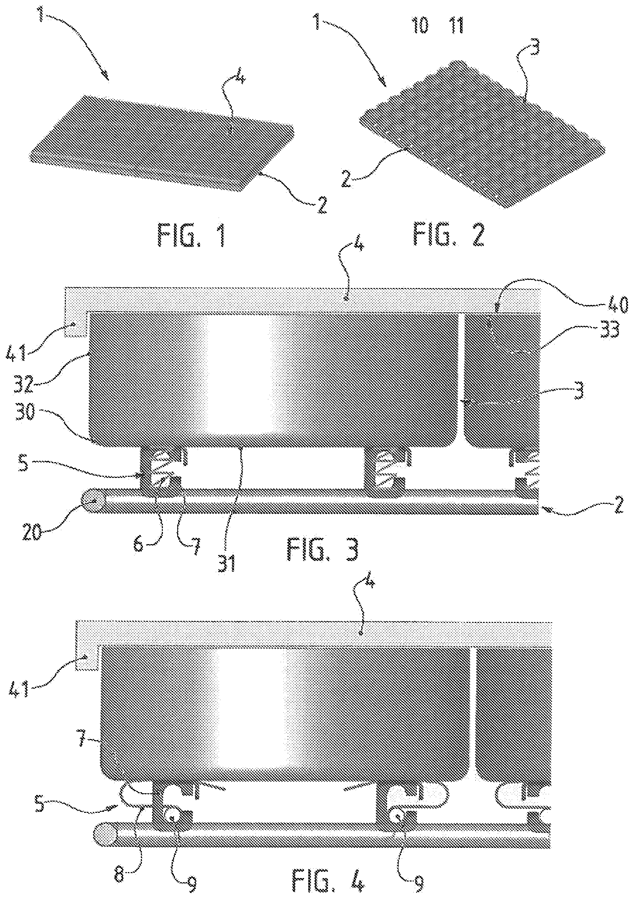

Préférentiellement, comme visible sur la figure 2, plusieurs moules 3 sont disposés régulièrement en surface de ladite plaque 2, selon des colonnes et des rangées.

On notera que chaque moule 3 est destiné à recevoir un pâton pendant les étapes de fermentation et de cuisson. Dès lors, chaque moule 3 peut présenter une forme adaptée en fonction de la forme du produit final à obtenir. Selon l'exemple de réalisation représenté et décrit, mais aucunement limitatif, lesdits moules 3 se présentent sous la forme de coupelles cylindriques de section circulaire et présentant une arête 30 arrondie entre la base 31 formant le fond et le bord périphérique 32. On notera que lesdits moules peuvent avoir d'autres formes, polygonales, parallélépipédiques, en forme d'étoile ou autre. La face opposée au fond est prévue ouverte pour l'introduction des pâtons et l'extraction des produits finis après cuisson.

De plus, ledit dispositif 1 comprend encore au moins une plaque supérieure 4 venant en recouvrement desdits moules 3, sa face inférieure 40 venant en contact avec les chants supérieurs 33 de leurs bords respectifs. En somme, la plaque 4 est simplement placée sur le haut des moules 3 et forme un couvercle, constitué en un seul ou plusieurs panneaux.

Avantageusement, le dispositif 1 comprend des moyens 5 de rappel élastique de chaque moule 3 selon au moins une force s'appliquant du bas vers le haut. En somme, les forces exercées par lesdits moyens de rappel 5 s'étendent verticalement ou sensiblement verticalement depuis la plaque inférieure 2 vers la plaque supérieure 4.

Ainsi, l'invention prévoit d'appliquer à chaque moule 3 de façon individuelle et indépendante une force propre à chacun d'entre eux. Cette dernière tend à repousser chaque moule 3 de façon distincte depuis la plaque inférieure 2 sur laquelle il est positionné vers la plaque supérieur 4, de sorte que les chants supérieurs 33 soient maintenus au contact de la face inférieure 40. Dès lors, l'étanchéité entre le haut des moules 3 et la plaque 4 est assurée, limitant les débordements de pâte lors de la fermentation et de la cuisson et garantissant la bonne qualité des produits finis.

Selon un mode de réalisation particulier, lesdits moyens de rappel élastique 5 peuvent comprendre des forces de rappel différentes en fonction du positionnement du moule 3 par rapport à la plaque support inférieure 2. Par exemple, les moyens de rappel élastique 5 situés en périphérie peuvent posséder une force inférieure à ceux situés plus au centre, ou inversement.

De plus, lesdits moyens de rappel élastique 5 peuvent être prévus réglables afin d'augmenter ou de diminuer leur force de rappel respective.

Selon un premier mode de réalisation, représenté sur la figure 3, lesdits moyens de rappel élastique 5 se présentent sous la forme d'au moins un ressort de compression 6. En particulier, au moins un ressort 6 équipe chaque moule 3, de préférence deux ressorts 6. Chacun est disposé entre la plaque support inférieure 2 et le fond du moule 3, de manière à repousser chaque moule 3 vers le haut. De plus, chaque ressort 6 peut être solidarisé à son extrémité basse de la plaque inférieure 2.

Selon un mode de réalisation particulier, lesdits moyens de rappel 5 peuvent constituer une liaison articulée et autorisent alors un mouvement de translation vertical et des mouvements oscillants de chaque moule 3 autour d'au moins un à trois axes de pivotement.

Selon un autre mode de réalisation, représenté sur la figure 4, lesdits moyens de rappel élastique 5 se présentent sous la forme d'au moins une lame flexible 8 en matériau à mémoire de forme. Plus particulièrement, deux lames 8 peuvent être positionnées sous chaque moule 3, de manière à le repousser vers le haut, selon les degrés de liberté évoqués plus haut.

Selon la réalisation représentée, chaque lame 8 présente une forme globale en S. En particulier, des tiges 9 peuvent maintenir l'extrémité basse 10 de chaque lame 8, la solidarisant avec ladite plaque support inférieure 2. L'extrémité opposée 11 est laissée libre, venant se plier lors du simple placement par le dessus d'un moule 3.

De plus, ledit dispositif 1 peut comprendre des butées 7, disposées sous chaque moule 3, de préférence solidaires du fond de ce dernier, de manière à limiter la course en détente des moyens de rappel élastique 5.

Plus précisément, ces butées 7 ont une forme de crochet de manière à permettre, d'une part, le crochetage de la tige 9 et ainsi assurer la retenue face à la poussée vers le haut des moyens de rappel élastique 5 et, d'autre part, de permettre de venir introduire un moule 3, au travers d'une fente traversée par ladite tige 9 en comprimant les moyens de rappel 5.

On notera alors qu'une même tige 9 peut s'étendre transversalement ou longitudinalement afin de relier et maintenir les lames 8 de plusieurs moules 3 disposées respectivement selon une rangée ou une colonne.

En outre, selon un mode préférentiel de réalisation, non représenté, ladite plaque support inférieure 2 peut comprendre des guides, s'entendant verticalement en saillie en face supérieure, de manière à assurer le coulissement des moules 3 lors de la course en translation en compression et inversement des moyens de rappel élastique 5.

De plus, selon le mode préférentiel de réalisation, lesdits moyens de rappel élastique 5 peuvent comprendre une liaison articulée avec chaque moule 3, de manière à assurer au moins un degré de liberté de mouvement dudit moule 3. De préférence, cette articulation est située en partie haute desdits moyens de rappel élastiques 5, au niveau de la jonction avec le fond desdits moules 3.

Selon une réalisation particulière, non représentée, cette articulation peut se présenter sous la forme d'un berceau hémisphérique concave ou sein duquel est montée libre en pivotement une bille, de type rotule. Une telle articulation offre alors audit moule 3 une liberté d'oscillation selon trois degrés de liberté.

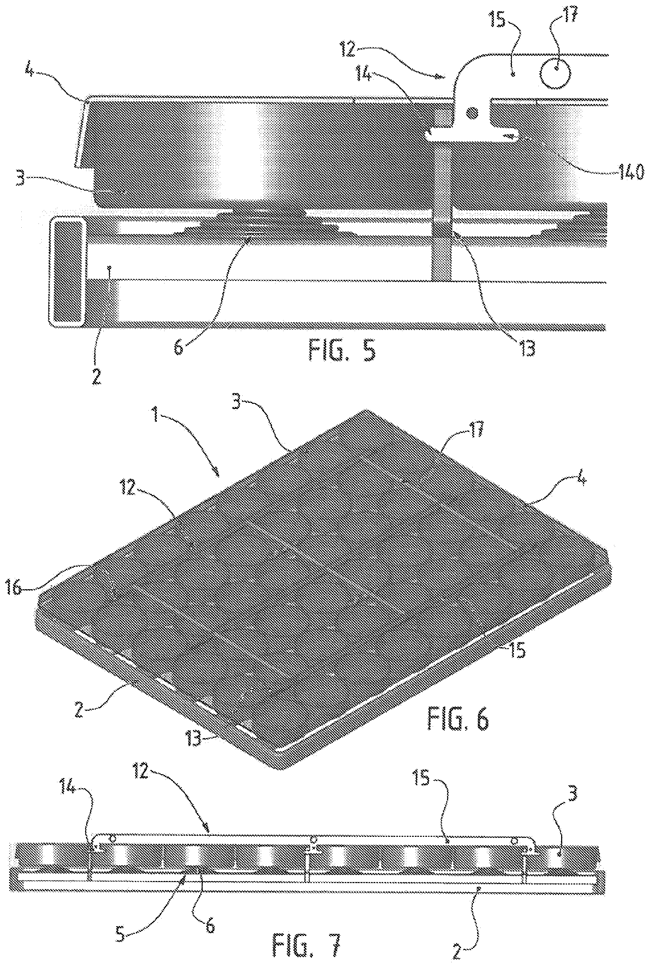

Selon encore un autre mode de réalisation, représenté sur la figure 5, lesdits moyens de rappel élastique 5 peuvent se présenter sous la forme d'un unique ressort de compression 6, disposé sous chaque moule 3. Plus particulièrement, chaque ressort 6 présente une forme droite, chacune de ses spires ayant une section identique, mais préférentiellement peut aussi être conique, son diamètre le plus grand étant situé en contact avec la plaque inférieure 2 tandis que son plus petit diamètre est en contact avec la face inférieure du fond du moule 3 qu'il soutient.

De façon additionnelle, une butée peut être disposée au centre dudit ressort 6, entre la plaque inférieure 2 et le fond du moule 3, limitant la course de ce dernier et ainsi sa compression.

Avantageusement, ce ressort 6 assure à son moule 3 un premier degré de liberté suivant un mouvement de translation verticale, mais aussi deux degrés de libertés d'oscillation du plan passant par le point ou la zone d'appui du haut dudit ressort 6 avec le fond du moule 3.

Ainsi articulé, le moule 3 peut se déplacer seul et son contact avec la plaque supérieure 4 s'adapte automatiquement, en fonction des irrégularités que présentent ses chants supérieurs 33, améliorant l'étanchéité ainsi créée.

Avantageusement, selon une caractéristique additionnelle, ladite plaque supérieure de recouvrement 4 présente une masse dont le poids est supérieur à la somme totale des forces desdits moyens de rappel élastique 5. En somme, le simple positionnement de la plaque supérieure 4, du fait de son poids, assure la compression au moins partielle tous les moyens de rappel élastique 5 du dispositif 1, de sorte que tous les chants supérieurs 33 de tous les moules 3 soit repoussés au contact de la face inférieure 40 de ladite plaque 4.

On notera que, dans cette configuration de simple positionnement de la plaque supérieure 4 sur les moules 3, ladite plaque 4 peut comprendre des rebords 41 prévus saillants en face inférieure, afin de la maintenir sur son pourtour par rapport auxdits moules 3 et, par conséquent, audit dispositif 1.

Selon un autre mode de réalisation, non représenté, ledit dispositif 1 comprend des moyens de verrouillage rapide de ladite plaque supérieure de recouvrement 4 avec ladite plaque support inférieure 2. De tels moyens de verrouillage permettent, d'une part, d'assurer le maintien et le blocage des deux plaques 2,4 ensembles et, d'autre part, de déterminer un espacement de verrouillage entre lesdites plaques 2,4, de sorte que les moyens de rappel élastique 5 soient comprimés.

De plus, ces moyens de verrouillage peuvent être positionnés uniquement sur le pourtour du dispositif 1, notamment sous forme d'attaches dite « rapide », de fermeture à clipsage, à crochetage, ou bien un couple vis-écrou, ou encore une vis de type papillon. Ainsi, il est possible de verrouiller et surtout retirer ladite plaque supérieure 4 rapidement et simplement au travers de moyens de verrouillages simples à mettre en oeuvre et peu coûteux.

Selon un autre mode de réalisation, représenté sur les figures 6 et 7, lesdits moyens de verrouillage peuvent se présenter sous la forme de moyens d'accrochage 12 montés au niveau de la plaque supérieure 4 de couverture des moules 3. Ces moyens 12 sont destinés à venir coopérer par crochetage avec des arceaux 13 montés sur ladite plaque inférieure 2, en saillie par rapport à sa face supérieure.

Selon le mode préférentiel de réalisation, lesdits arceaux 13 peuvent être constitués par un élément en U inversé dont les extrémités libres sont fixées en face supérieure de la plaque inférieur 2. De plus, ces arceaux 13 peuvent être disposés entre les moules 3, en particulier au niveau d'espaces libres ménagés entre lesdits moules 3 en raison de leur forme.

Pour ce faire, préférentiellement, lesdits moyens d'accrochage 12 comprennent au moins un crochet 14 prévu mobile, de manière à passer d'une position de crochetage avec un arceau 13, en verrouillage de la plaque supérieure 4 sur la plaque inférieure 2, vers une position escamotée, déverrouillant l'ensemble, et inversement.

Plus précisément, cette mobilité consiste en un déplacement en translation, parallèlement à ladite plaque supérieure 4.

On notera que chaque crochet 14 peut aussi comprend un crochet opposé 140, venant assurer le crochetage et le maintien avec la plaque supérieure 4 en position déverrouillée. En somme, ce crochet opposé 140 forme une butée sous le couvercle lors du positionnement ou l'enlèvement de ce dernier.

Comme visible sur la figure 6, lesdits moyens d'accrochage 12 se présentent sous la forme de profilés 15, en face inférieure desquels sont ménagés plusieurs crochets 14. Ces profilés 15 viennent être appliqués en face supérieure de la plaque supérieure 4, des fentes 16 étant ménagées au travers de cette dernière afin d'autoriser le passage et le déplacement desdits crochets 14. En particulier, ces fentes 16 permettent de guider les crochets 14 et les profilés 15 lors de leur mouvement de l'une à l'autre des positions de verrouillage.

Préférentiellement, plusieurs profilés 15 peuvent être reliés entre eux transversalement par des tiges 17 de liaison. Ces dernières assurent une jonction intégrale des différents profilés 15 entre eux et, de ce fait, leur déplacement conjoint et simultané.

De tels moyens d'accrochage 12 permettent de maintenir les plaques 2 et 4 entre elles, en comprimant les moyens de rappel 5 mais sans opérer un verrouillage complexe à mettre en oeuvre et à désolidariser après cuisson.

Dès lors, le dispositif 1 de plaque support de produits de boulangerie ou similaire, assure une jonction en contact et une étanchéité individualisées de chaque moule 3 avec la face inférieure 40 de la plaque supérieure 4 venant en recouvrement, au travers d'une force de rappel qui n'est plus globale mais spécifique à chaque moule 3, permettant de contrer localement la déformation de la pâte, en cours de fermentation et de la cuisson.

## Revendications

1. Dispositif (1) de plaque support de produits de boulangerie, pâtisserie ou viennoiserie, comprenant au moins une plaque inférieure (2) et au moins deux moules (3) supportés par ladite plaque inférieure (2), ledit dispositif (1) comprenant encore au moins une plaque supérieure (4) venant en recouvrement desdits moules (3), sa face inférieure (40) venant en contact avec les chants supérieurs (33) de leurs bords respectifs, **caractérisé par le fait qu'**il comprend des moyens de rappel élastique (5) de chaque moule (3) selon une force repoussant de façon individuelle et indépendante chaque moule (3) contre la face inférieure de la plaque supérieure (4).

2. Dispositif (1) de plaque support selon la revendication 1, **caractérisé par le fait que** lesdits moyens de rappel élastique (5) comprennent une liaison articulée avec chaque moule (3), de manière à assurer au moins un degré de liberté de mouvement dudit moule (3) par rapport à la plaque inférieure.

3. Dispositif (1) selon l'une quelconque des revendications précédentes, **caractérisé par le fait que** lesdits moyens de rappel élastique (5) se présentent sous la forme d'au moins un ressort de compression (6), notamment conique.

4. Dispositif (1) selon l'une quelconque des revendications 1 ou 2, **caractérisé par le fait que** lesdits moyens de rappel élastique (5) se présentent sous la forme d'au moins une lame flexible (8) en matériau à mémoire de forme.

5. Dispositif (1) selon l'une quelconque des revendications précédentes, **caractérisé par le fait que** ladite plaque supérieure de recouvrement (4) présente une masse dont le poids est au moins supérieur à la somme totale des forces de rappel desdits moyens de rappel élastique (5).

6. Dispositif (1) selon l'une quelconque des revendications précédentes, **caractérisé par le fait qu'**il comprend des moyens de verrouillage rapide de ladite plaque supérieure de recouvrement (4) avec ladite plaque support inférieure (2).

## Patentansprüche

1. Trägerplattenvorrichtung (1) für Bäckerei-, Konditorei- oder Feingebäckprodukte, umfassend mindestens eine untere Platte (2) und mindestens zwei Formen (3), die von der unteren Platte (2) getragen werden, wobei die Vorrichtung (1) weiterhin mindestens eine obere Platte (4) umfasst, die die Formen (3) abdeckt, wobei ihre untere Fläche (40) in Kontakt mit den oberen Schmalseiten (33) ihrer jeweiligen Ränder kommt, **dadurch gekennzeichnet, dass** sie elastische Rückstellmittel (5) jeder Form (3) gemäß einer Kraft umfasst, die jede Form (3) einzeln und unabhängig gegen die untere Fläche der oberen Platte (4) zurückdrückt.

2. Trägerplattenvorrichtung (1) nach Anspruch 1, **dadurch gekennzeichnet, dass** die elastischen Rückstellmittel (5) eine Gelenkverbindung mit jeder Form (3) derart umfassen, dass mindestens ein Bewegungsfreiheitsgrad der Form (3) in Bezug auf die untere Platte gewährleistet ist.

3. Vorrichtung (1) nach einem der vorangehenden Ansprüche, **dadurch gekennzeichnet, dass** die elastischen Rückstellmittel (5) in Form von mindestens einer insbesondere konischen Kompressionsfeder (6) vorliegen.

4. Vorrichtung (1) nach einem der Ansprüche 1 oder 2, **dadurch gekennzeichnet, dass** die elastischen Rückstellmittel (5) in Form von mindestens einer flexiblen Lamelle (8) aus Material mit Formengedächtnis vorliegen.

5. Vorrichtung (1) nach einem der vorangehenden Ansprüche, **dadurch gekennzeichnet, dass** die obere Abdeckplatte (4) eine Masse aufweist, deren Gewicht mindestens größer als die Gesamtsumme der Rückstellkräfte der elastischen Rückstellmittel (5) ist.

6. Vorrichtung (1) nach einem der vorangehenden Ansprüche, **dadurch gekennzeichnet, dass** sie Schnellverriegelungsmittel der oberen Abdeckplatte (4) mit der unteren Trägerplatte (2) umfasst.

## Claims

1. A support plate device (1) for bakery, pastry or cake products, comprising at least one lower plate (2) and at least two molds (3) supported by said lower plate (2), said device (1) also comprising at least one upper plate (4) overlapping said molds (3), its lower face (40) coming into contact with the upper rims (33) of their respective edges, **characterized in that** it comprises resilient return means (5) of each mold (3) with a force individually and independently repelling each mold (3) against the lower face of the upper plate (4).

2. The support plate device (1) according to claim 1, **characterized in that** said resilient return means (5) comprise a link articulated with each mold (3), so as to provide at least one degree of movement freedom of said mold (3) relative to the lower plate.

3. The device (1) according to any one of the preceding claims, **characterized in that** said resilient return means (5) assume the form of at least one compression spring (6), in particular conical.

4. The device (1) according to any one of claims 1 or 2, **characterized in that** said resilient return means (5) assume the form of at least one flexible leaf (8) made from shape memory material.

5. The device (1) according to any one of the preceding claims, **characterized in that** said upper overlapping plate (4) has a mass whose weight is at least greater than the total sum of the return forces of said resilient return means (5).

6. The device (1) according to any one of the preceding claims, **characterized in that** it comprises quick locking means for locking said upper overlapping plate (4) with said lower support plate (2).
